(19) Europäisches Patentamt
European Patent Office
Office européen des brevets

(11) Publication number: 0 110 344
A1

# (12) EUROPEAN PATENT APPLICATION

(21) Application number: **83111812.0**

(22) Date of filing: **25.11.83**

(51) Int. Cl.³: **H 01 M 6/16**, H 01 M 4/50, H 01 M 4/62

(30) Priority: **06.12.82 US 447106**

(43) Date of publication of application: **13.06.84**
**Bulletin 84/24**

(84) Designated Contracting States: **CH DE FR GB LI**

(71) Applicant: **UNION CARBIDE CORPORATION, Old Ridgebury Road, Danbury Connecticut 06817 (US)**

(72) Inventor: **Leger, Violeta Zilionis, 5415 Sunset Oval, North Olmsted Ohio 44070 (US)**
Inventor: **Evans, William Philip, 20644 Stratford Avenue, Rocky River Ohio 44116 (US)**

(74) Representative: **Görtz; Dr. Fuchs; Dr. Harders Patentanwälte, Sonnenberger Strasse 100 Postfach 26 26, D-6200 Wiesbaden (DE)**

(54) **Nonaqueous cells.**

(57) A nonaqueous cell employing a manganese dioxide-containing solid cathode having a minor amount of an alkaline earth metal compound additive selected from the group consisting of alkaline earth metal hydroxides, alkaline earth metal carbonates, and mixtures thereof, to suppress the build-up of internal impedance in the cell during storage and discharge that may occur with electrolyte degradation.

EP 0 110 344 A1

0110344

# NONAQUEOUS CELLS

## Field of the Invention

The invention relates to a nonaqueous cell comprising an active anode, a nonaqueous electrolyte solution based on at least one organic solvent and a solid cathode comprising manganese dioxide, a binder and a conductive agent.

## Background of the Invention

The development of high energy battery systems requires the compatibility of an electrolyte possessing desirable electrochemical properties with highly reactive anode materials, such as lithium, sodium and the like, and the efficient use of high energy density cathode materials, such as manganese dioxide. The use of aqueous electrolytes is precluded in these systems since the anode materials are sufficiently active to react with water chemically. It has, therefore, been necessary, in order to realize the high energy density obtainable through use of these highly reactive anodes and high energy density cathodes, to turn to the investigation of nonaqueous electrolyte systems and more particularly to nonaqueous electrolyte systems based on organic solvents.

The term "nonaqueous electrolyte" in the prior art refers to an electrolyte which is composed of a solute, for example, a salt or a complex salt of Group I-A, Group II-A or Group III-A elements of the Periodic Table, dissolved in an appropriate nonaqueous organic solvent. Conventional solvents include propylene carbonate, ethylene carbonate

or γ-butyrolactone. The term "Periodic Table" as used herein refers to the Periodic Table of the Elements as set forth on the inside back cover of the Handbook of Chemistry and Physics, 60th Edition, CRC Press Inc., Boca Raton, Florida, 1979-1980.

Although manganese dioxide has been mentioned as a cathode for cell applications, manganese dioxide inherently contains an unacceptable amount of water, both of the adsorbed and bound (absorbed) types, which is sufficient to cause anode (lithium) corrosion along with its associated hydrogen evolution. This type of corrosion that causes gas evolution is a serious problem in sealed cells, particularly in miniature type button cells. In order to maintain battery-powered electronic devices as compact as possible, the electronic devices are usually designed with cavities to accommodate the miniature cells as their power source. The cavities are usually made so that a cell can be snugly positioned therein thus making electronic contact with appropriate terminals within the device. A major potential problem in the use of cell-powered devices of this nature is that if the gas evolution causes the cell to bulge then the cell could become wedged within the cavity. This could result in damage to the device. Also, if electrolyte leaks from the cell it could cause damage to the device. It is therefore important that the physical dimensions of the cell's housing remain constant during discharge and that the cell will not leak any electrolyte into the device being powered.

In order to reduce the water content in manganese dioxide, several process have been

developed. For example, US-A 4,133,856 discloses a process for producing an $MnO_2$ electrode (cathode) for nonaqueous cells whereby the $MnO_2$ is initially heated within a range of 350°C to 430°C so as to substantially remove both the adsorbed and bound water and then, after being formed into an electrode with a conductive agent and binder, it is further heated in a range of 200°C to 350°C prior to its assembly into a cell. British Patent 1,199,426 also discloses the heat treatment of $MnO_2$ in air at 250°C to 450°C to substantially remove its water component.

US-A 4,133,856 discloses a process whereby a homogeneous mass of particulate manganese dioxide is heat-treated and then contacted with an organic solvent that substantially fills the pores of the manganese dioxide with a layer of the organic solvent which effectively decreases the affinity or propensity of the manganese dioxide for readsorbing moisture.

German patent application , DE-A 31 12 454 discloses a process whereby the walls of the pores of manganese dioxide are coated by vapor-depositing an organic solvent thereon to reduce the manganese dioxide's affinity for adsorbing moisture when exposed to a moisture-containing environment for a fixed time period.

Although manganese dioxide with reduced water content is better suited for nonaqueous cell systems, it was noted that cells employing this type of active material had a tendency to show increased internal impedance during storage. This condition is accompanied by poor closed circuit voltage, poor

high and low temperature shelf life, poor cell voltage maintenance characteristics, poor pulse rate discharge capabilities, etc.

It is an object of the present invention to provide a nonaqueous cell employing among other components a manganese dioxide-containing solid cathode having a minor amount of an alkaline earth metal hydroxide and/or carbonate to suppress or minimize the increase in the internal impedance of the cell which may occur during storage or discharge.

Another object of the present invention is to provide a manganese dioxide-containing nonaqueous cell having good voltage maintenance and pulse discharge characteristics even after prolonged storage.

The foregoing and additional objects will become more fully apparent from the following description.

## Summary of the Invention

The invention is directed to a nonaqueous cell comprising an active anode, a nonaqueous electrolyte solution based on at least one organic solvent and a solid cathode comprising manganese dioxide, a binder and a conductive agent, the improvement wherein the cathode contains at least one compound selected from the group consisting of alkaline earth metal hydroxides such as $Mg(OH)_2$, $Ca(OH)_2$, $Ba(OH)_2$ and $Sr(OH)_2$ and alkaline earth metal carbonates, such as $MgCO_3$, $CaCO_3$, $BaCO_3$ and $SrCO_3$.

Although not wishing to be held to any theory, it is believed that electrolyte degradation occurs in $MnO_2$-containing nonaqueous cells due to

the reaction of surface acidic groups on the $MnO_2$ with the organic solvent of the electrolyte. Also, the use of incompletely neutralized salts in preparing the electrolyte solution may also introduce acidic impurities. Moreover, because of the relatively high solubility of these compounds in non-aqueous electrolytes, the addition of the selected alkaline earth metal hydroxide and/or carbonate is believed to react with the acidic impurities in the cell to neutralize them. This addition to the cell's cathode will effectively suppress build-up of internal impedance of the cell which could be caused by electrolyte degradation.

The alkaline earth metal compound additive should be incorporated in the $MnO_2$-containing cathode by an amount between about 0.05 and about 10 weight percent based on the dry weight of the cathode, preferably, between about 0.1 and about 3 weight percent and more preferably about 1 weight percent. An amount of the alkaline earth metal compound additive below (0.05) weight percent will not provide sufficient basicity to effectively neutralize acidic impurities in the cell for the reason discussed above. An amount of the alkaline earth metal compound additive above 10 weight percent would generally provide an excess of basicity for neutralizing the acidic impurities for most cell applications while also decreasing the volume for the active cathode material for given size cells. It will be appreciated that the range of the additive will also depend upon the basicity of the alkaline earth metal compound selected and the type of manganese dioxide employed. Of the alkaline earth metal compounds suitable for this invention, $Ca(OH)_2$ and $CaCO_3$ are the most preferred.

The alkaline earth metal compound additive can be blended directly with the dry cathode mix or it can be added during the aqueous processing of the wet cathode mix. When blended with the dry cathode mix, the alkaline earth metal compound may be selected from alkaline earth metal hydroxides, carbonates and mixtures thereof. The dry mix is then molded into cathode pellets using conventional techniques.

When the alkaline earth metal compound additive is added to the wet cathode mix, it may be added in the form of alkaline earth metal hydroxide or carbonate or in the form of an alkaline earth metal compound which will form a hydroxide and/or carbonate in an aqueous solution. For example, when alkaline earth metal oxide is added to water its hydration to alkaline earth metal hydroxide is virtually complete. Moreover, a proportion of alkaline earth metal hydroxide, when in aqueous solution, will react with carbon dioxide present in the atmosphere to form alkaline earth metal carbonate. Thus, the initial use of the oxide or hydroxide form in such a wet process may result in a product that is at least part carbonate. A drying step will be required before the cathode mix can be molded.

The water inherently contained in both electrolytic and chemical types of manganese dioxide can be substantially removed by various treatments. For example, the manganese dioxide can be heated in air or an inert atmosphere at a temperature of 350°C for about 8 hours or at a lower temperature for a longer period of time. Care should be taken to avoid heating the manganese dioxide above its decomposition temperature which is about 400°C in

air. In oxygen atmospheres, higher temperatures may be employed.

Preferably, the manganese dioxide should be heat-treated to remove its water content in the crystal lattice to below about 1 weight percent and then it can be mixed with a conductive agent such as graphite, carbon or the like and a binder such a Teflon (trademark for polytetrafluoroethylene), ethylene acrylic acid copolymer or the like to produce a solid cathode. If desired, a small amount of the electrolyte can be incorporated into the manganese dioxide mix.

An added possible benefit in the removal of substantially all the water from manganese dioxide is that if small amounts of water are present in the cell's electrolyte then the manganese dioxide will adsorb the main portion of that water from the electrolyte and thereby prevent or substantially delay the reaction of the water with the anode such as lithium. In this situation, the manganese dioxide will act as an extracting agent for the water impurities in the organic solvents.

Useful highly active metal anode materials include aluminum, the alkali metals, alkaline earth metals and alloys of alkali metals or alkaline earth metals with each other and other metals. The term "alloy" as used herein and in the appended claims is intended to include mixtures, solid solutions, such as lithium-magnesium, and intermetallic compounds, such as lithium monoaluminide. The preferred anode materials are lithium, sodium, potassium, calcium and alloys thereof.

Useful organic solvents employed alone or mixed with one or more other solvents for use in

this invention include the following classes of compounds:

Alkylene nitriles: e.g., crotonitrile
(liquid range, -51.1°C to 120°C)

Trialkyl borates: e.g., trimethyl borate,
$(CH_3O)_3B$
(liquid range, -29.3 to 67°C)

Tetraalkyl silicates: e.g., tetramethyl silicate,
$(CH_3O)_4Si$ (boiling point, 121°C)

Nitroalkanes: e.g., nitromethane, $CH_3NO_2$
(liquid range, -17 to 100.8°C)

Alkylnitriles: e.g., acetonitrile, $CH_3CN$
(liquid range, -45 to 81.6°C)

Dialkylamides: e.g., dimethylformamide, $HCON(CH_3)2$
(liquid range, -60.48 to 149°C)

Lactams: e.g., N-methypyrrolidone,
$CH_2-CH_2-CH_2-CO-N-CH_3$
(liquid range, -16 to 202°C)

Tetraalkylureas: e.g., tetramethylurea,
$(CH_3)_2N-CO-N(CH_3)_2$
(liquid range, -1.2 to 166°C)

Monocarboxylic acid esters: e.g., ethyl acetate
(liquid range, -83.6 to 77.06°C)

Orthoesters: e.g., trimethylorthoformate,
$HC(OCH_3)_3$
(boiling point, 103°C)

Lactones: e.g., γ- butyrolactone,
$CH_2-CH_2-CH_2-O-CO$
(liquid range, -42 to 206°C)

Dialkyl carbonates: e.g., dimethyl carbonate,
$OC(OCH_3)_2$
(liquid range, 2 to 90°C)

Alkylene carbonates: e.g., propylene carbonate,
$CH(CH_3)CH_2-O-CO-O$
(liquid range, -48 to 242°C)

Monoethers: e.g., diethyl ether (liquid range, -116 to 34.5°C)

Polyethers: e.g., 1,1- and 1,2-dimethoxyethane (liquid ranges, -113.2 to 64.5°C and -58 to 83°C, respectively)

Cyclic ethers: e.g., tetrahydrofuran (liquid range, -65 to 67°C); 1,3-dioxolane (liquid range, -95 to 78°C)

Nitroaromatics: e.g., nitrobenzene (liquid range, 5.7 to 210°C)

Aromatic carboxylic acid halides: e.g., benzoyl chloride (liquid range, 0 to 197°C); benzoyl bromide (liquid range, -24 to 218°C)

Aromatic sulfonic acid halides: e.g., benzene sulfonyl chloride (liquid range, 14.5 to 251°C)

Aromatic phosphonic acid dihalides: e.g., benzene phosphonyl dichloride (boiling point, 258°C)

Aromatic thiophosphonic acid dihalides: e.g., benzene thiophosphonyl dichloride (boiling point 124°C at 5 mm)

Cyclic sulfones: e.g., sulfolane, $\overline{CH_2-CH_2-CH_2-CH_2-SO_2}$ (melting point, 22°C); 3-methylsulfolane (melting point, -1°C)

Alkyl sulfonic acid halides: e.g., methanesulfonyl chloride (boiling point, 161°C)

Alkyl carboxylic acid halides: e.g., acetyl chloride (liquid range, -112 to 50.9°C); acetyl bromide (liquid range, -96 to 76°C); propionyl chloride (liquid range, -94 to 80°C)

Saturated heterocyclics: e.g., tetrahydrothiophene (liquid range, -96 to 121°C); 3-methyl-2-oxazolidone (melting point, 15.9°C)

Dialkyl sulfamic acid halides: e.g., dimethyl sulfamyl chloride (boiling point, 80°C at 16mm)

Alkyl halosulfonates: e.g., ethyl chlorosulfonate (boiling point, 151°C)

Unsaturated heterocyclic carboxylic acid halides: e.g., 2-furoyl chloride (liquid range, -2 to 173°C)

Five-membered unsaturated heterocyclics: e.g., 3,5-dimethylisoxazole (boiling point, 140°C); 1-methylpyrrole (boiling point, 114°C); 2,4-dimethylthiazole (boiling point, 144°C); furan (liquid range, -85.65 to 31.36°C)

Esters and/or halides of dibasic carboxylic acids: e.g., ethyl oxalyl chloride (boiling point, 135°C)

Mixed alkyl sulfonic acid halides and carboxylic acid halides: e.g., chlorosulfonyl acetyl chloride (boiling point, 98°C at 10mm)

Dialkyl sulfoxides: e.g., dimethyl sulfoxide (liquid range, 18.4 to 189°C)

Dialkyl sulfates: e.g., dimethylsulfate (liquid range, -31.75 to 188.5°C)

Dialkyl sulfites: e.g., dimethylsulfite (boiling point, 126°C)

Alkylene sulfites: e.g., ethylene glycol sulfite (liquid range, -11 to 173°C)

Halogenated alkanes: e.g., methylene chloride

(liquid range, -95 to 40°C);
1,3-dichloropropane (liquid range, -99.5 to 120.4°C)

The preferred solvents are sulfolane; tetrahydrofuran; methyl-substituted tetrahydrofuran; 1,3-dioxolane; 3-methyl-2-oxazolidone; propylene carbonate; γ -butyrolactone; ethylene glycol sulfite; dimethylsulfite; dimethyl sulfoxide; and 1,1- and 1,2-dimethoxyethane. Of the preferred solvents, the best are sulfolane; 3-methyl-2-oxazolidone; propylene carbonate; 1,1- and 1,2-dimethoxyethane, and 1,3-dioxolane because they appear more chemically inert to battery components and have wide liquid ranges, and especially because they permit highly efficient utilization of the cathode materials.

The best electrolyte for use in this invention is a 3-methyl-2-oxazolidone-based electrolyte. Liquid organic 3-methyl-2-oxazolidone, (3Me2Ox)

$$CH_2-CH_2-O-CO-N-CH_3,$$

is an excellent nonaqueous solvent because of its high dielectric constant, chemical inertness to battery components, wide liquid range and low toxicity.

However, it has been found that when metal salts are dissolved in liquid 3Me2Ox for the purpose of improving the conductivity of 3Me2Ox, the viscosity of the solution may be too high for its efficient use as an electrolyte for some nonaqueous cell applications other than those requiring very low current drains. Thus, in some applications in accordance with this invention, the addition of a

low viscosity cosolvent would be desirable if 3Me2Ox is to be used as an electrolyte for nonaqueous cells which can operate or perform at a high energy density level.

The low viscosity cosolvents which can be used along with 3Me2Ox include tetrahydrofuran (THF), methyl-substituted tetrahydrofuran(Met-THF), dioxolane (DIOX), dimethoxyethane (DME), dimethyl isoxazole (DMI), diethyl carbonate (DEC), ethylene glycol sulfite (EGS), dioxane, dimethyl sulfite (DMS) or the like. Dimethoxyethane (DME), and dioxolane (DIOX) are preferred cosolvents because of their compatibility with metal salts dissolved in liquid 3Me2Ox and their chemical inertness to cell components. Specifically, the total amount of the low viscosity cosolvent added could be between about 20% and about 80% based on total solvent volume, i.e., exclusive of solute, so as to lower the viscosity to a level suitable for use in a high drain cell.

The ionizing solute for use in the invention may be a simple or double salt or mixtures thereof, for example, $LiCF_3SO_3$, $LiBF_4$ and $LiClO_4$ which will produce an ionically conductive solution when dissolved in one or more solvents. Preferred solutes are complexes of inorganic or organic Lewis acids and inorganic ionizable salts. The only requirements for utility are that the salts, whether simple or complex, be compatible with the solvent or solvents being employed and that they yield a solution which is sufficiently ionically conductive. According to the Lewis or electronic concept of acids and bases, many substances which contain no active hydrogen can act as acids or

acceptors of electron doublets. The basic concept is set forth in the chemical literature (Journal of the Franklin Institute, Vol. 226 - July/December, 1938, pages 293-313 by G.N Lewis).

A suggested reaction mechanism for the manner in which these complexes function in a solvent is described in detail in U.S. Patent No. 3,542,602 wherein it is suggested that the complex or double salt formed between the Lewis acid and the ionizable salt yields an entity which is more stable than either of the components alone.

Typical Lewis acids suitable for use in the present invention include aluminum fluoride, aluminum bromide, aluminum chloride, antimony pentachloride, zirconium tetrachloride, phosphorus pentachloride, boron fluoride, boron chloride and boron bromide.

Ionizable salts useful in combination with the Lewis acids include lithium fluoride, lithium chloride, lithium bromide, lithium sulfide, sodium fluoride, sodium chloride, sodium bromide, potassium fluoride, potassium chloride and potassium bromide.

It will be obvious to those skilled in the art that the double salts formed by a Lewis acid and an inorganic ionizable salt may be used as such or the individual components may be added to the solvent separately to form the double salt or the resulting ions in situ. One such double salt, for example, is that formed by the combination of aluminum chloride and lithium chloride to yield lithium aluminum tetrachloride.

**EXAMPLE 1**

Several miniature cells having a 0.785 inch (1.99 cm) diameter and 0.063 inch (0.16 cm) high

were constructed with each employing a cathode consisting of a 0.35 gram mix containing 87 weight percent $MnO_2$, 9 weight percent of graphite, 3 weight percent polytetrafluoroethylene and 1 weight percent of an alkaline earth metal compound additive; a 0.025 gram lithium anode; a separator; and about 0.105 milliliter of an electrolyte consisting of about 40 volume percent of dioxolane, about 30 volume percent dimethoxyethane (DME), about 30 volume percent 3Me2Ox and containing 1M $LiCF_3SO_3$. (The alkaline earth metal compound additive was added to the wet cathode mix in the form of CaO. As explained above, this resulted in the additive having a composition of $Ca(OH)_2$ and/or $CaCO_3$). Additional miniature cells (control) were constructed as above except that they did not contain the alkaline earth metal additive.

Three fresh cells of each type were discharged across a 30K-ohm background load with a superimposed 400-ohm pulse load (once per day for two seconds) to a 2.0 volt cutoff and the average milliampere hour (mAh) output for these three cells was calculated. The data obtained are shown in Table 1.

TABLE 1

| Cell Sample | Cathode Additive | Discharge Capacity (mAh) 30K-ohm background load | 400-ohm pulse load |
|---|---|---|---|
| A (control) | none | 65 | 41 |
| B | $Ca(OH)_2$/ $CaCO_3$ | 77 | 58 |

Three additional cells of each type were stored for one month at 71°C and then discharged in the same manner to a 2.0 volt cutoff. The average milliampere hour output was calculated and the data so obtained are shown in Table 2.

TABLE 2

| Cell Sample | Cathode Additive | Discharge Capacity (mAh) 30K-ohm background load | 400-ohm pulse load |
|---|---|---|---|
| A (control) | none | 56 | 16 |
| B | $Ca(OH)_2$/ $CaCO_3$ | 74 | 40 |

Three additional cells of each type were stored for 40 days at 60°C and then discharged in the same manner to a 2.0 volt cutoff. The average milliampere hour output was calculated and the data so obtained are shown in Table 3.

TABLE 3

| Cell Sample | Cathode Additive | Discharge Capacity (mAh) 30K-ohm background load | 400-ohm pulse load |
|---|---|---|---|
| A (control) | none | 72 | 43 |
| B | $Ca(OH)_2$/ $CaCO_3$ | 76 | 44 |

Example 2

Several miniature cells were constructed as in Example 1. Three fresh cells of each type were then continuously discharged across a 30K-ohm background load and twelve times a day the cells were pulse-discharged across a superimposed 400-ohm

load for two seconds until a 2.0 volt cutoff was reached. The average milliampere hour output on pulse discharge was calculated and the data so obtained are shown in Table 4.

TABLE 4

| Cell Sample | Cathode Addition | Pulse Discharge Capacity (mAh) |
|---|---|---|
| A (control) | none | 63 |
| B | $Ca(OH)_2/CaCO_3$ | 59 |

Three additional cells of each type were stored 40 days at 60°C and then continuously discharged across a 30K-ohm background load and twelve times a day each cell was pulse-discharged across a superimposed 400-ohm load for 2 seconds until a 2.0 volt cutoff was reached. The average milliampere hour output on pulse discharge was calculated and the data so obtained are shown in Table 5.

TABLE 5

| Cell Sample | Cathode Addition | Pulse Discharge Capacity (mAh) |
|---|---|---|
| A (control) | none | 33 |
| B | $Ca(OH)_2/CaCO_3$ | 58 |

As is evident from the data shown in Table 5, the cells of this invention exhibit superior pulse maintenance after being stored at 60°C for forty days compared with cells of the prior art that

did not employ an alkaline earth metal compound additive in the cathode.

Example 3

Several cylindrical cells having a 0.451 inch (1.105 cm) diameter and a 0.420 inch (1.029 cm) height were constructed with each employing a cathode made up of a 0.94 gram mix containing 87 weight percent $MnO_2$, 9 weight percent graphite, 3 weight percent polytetrafluoroethylene, and 1 weight percent of alkaline earth metal compound (the compound was formed by adding calcium oxide to the wet cathode mix as discussed above); a 0.063 gram lithium anode; a separator; and about 280 milliliters of an electrolyte consisting of about 50 volume percent of propylene carbonate, about 50 volume percent of dimethoxyethane, and containing 1M $LiCF_3SO_3$. Additional control cells were constructed in an identical fashion except that no alkaline earth metal compound additive was added.

Three fresh cells of each type were discharged at -20°C across a 50 ohm load to a 1.5 volt cutoff and the average milliampere hour (mAh) output for these cells was calculated. The data obtained are shown in Table 6.

TABLE 6

| Cell Sample | Cathode Addition | Pulse Discharge Capacity (mAh) |
|---|---|---|
| A (control) | none | 22 |
| B | $Ca(OH)_2/CaCO_3$ | 25 |

Three additional cells of each type were stored for 20 days at 60°C and then discharged at -20°C in the same manner to a 1.5 volt cutoff. The average milliampere hour output was calculated and the data so obtained are shown in Table 7.

TABLE 7

| Cell Sample | Cathode Addition | Pulse Discharge Capacity (mAh) |
|---|---|---|
| A (control) | none | 0 |
| B | $Ca(OH)_2/CaCO_3$ | 8 |

CLAIMS:

1. A nonaqueous cell comprising an active anode, a nonaqueous electrolyte solution based on at least one organic solvent and a solid cathode comprising manganese dioxide, a binder and a conductive agent, characterized in that the cathode contains a minor amount of an alkaline earth metal compound additive selected from the group consisting of alkaline earth metal hydroxides, alkaline earth metal carbonates, and mixtures thereof.

2. The nonaqueous cell of claim 1, characterized in that the alkaline earth metal compound additive in the cathode is present in an amount between about 0.05 weight percent and about 10 weight percent based on the dry weight of the cathode.

3. The nonaqueous cell of claim 2, characterized in that the alkaline earth metal compound additive is present in an amount between about 0.1 weigth percent and about 3 weight percent based on the dry weight of the cathode.

4. The nonaqueous cell of claim 1, characterized in that the alkaline earth metal compound additive comprises $Ca(OH)_2$.

5. The nonaqueous cell of claim 4, characterized in that the conductive agent is a carbonaceous material.

6. The nonaqueous cell of claim 4, characterized in that the binder is polytetrafluoroethylene or ethylene acrylic acid copolymer.

0110344

7. The nonaqueous cell of claim 4, characterized in that said metal anode is selected from the group consisting of lithium, potassium, sodium, calcium, magnesium, aluminum and looys thereof.

8. The nonaqueous cell of claim 4, characterized in that said metal anode is lithium.

9. The nonaqueous cell of claim 1, characterized in that the alkaline earth metal compound additive comprises $CaCO_3$.

10. The nonaqueous cell of claim 9, characterized in that the conductive agent is a carbonaceous material.

11. The nonaqueous cell of claim 9, characterized in that the binder is polytetrafluoroethylene or ethylene acrylic acid copolymer.

12. The nonaqueous cell of claim 9, characterized in that said metal anode is selected from the group consisting of lithium, potassium, sodium, calcium, magnesium, aluminum and alloys thereof.

13. The nonaqueous cell of claim 9, characterized in that said metal anode is lithium.

European Patent Office

# EUROPEAN SEARCH REPORT

0110344
Application number

EP 83111812.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US - A - 4 264 689 (MOSES)<br>* Examples 1,3,4 *<br>-- | 1-13 | H 01 M 6/16<br>H 01 M 4/50<br>H 01 M 4/62 |
| X | EP - A2 - 0 033 853 (MATSUSHITA)<br>* Claims *<br>-- | 1-13 | |
| A,D | US - A - 4 133 856 (IKEDA et al.)<br>* Claims *<br>-- | 1,5,6 | |
| A,D | DE - A1 - 3 112 454 (UNION CARBIDE)<br>* Abstract *<br>---- | 1,5,6 | |

TECHNICAL FIELDS SEARCHED (Int. Cl. 3)

H 01 M

The present search report has been drawn up for all claims

| Place of search | Date of completion of the search | Examiner |
|---|---|---|
| VIENNA | 29-02-1984 | LUX |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document

EPO Form 1503. 03.82